# EUROPEAN PATENT SPECIFICATION

(11) **EP 2 784 339 B1**
(45) Date of publication and mention of the grant of the patent: **16.08.2017**
(21) Application number: 14161010.5
(22) Date of filing: 21.03.2014
(51) Int. Cl.: F16C 19/38, F16C 33/60

(54) **ROLLING BEARING COMPRISING AT LEAST ONE MULTI-PART RING, NOTABLY FOR A WIND TURBINE**
WÄLZLAGER MIT MINDESTENS EINEM MEHRTEILIGEN RING, INSBESONDERE FÜR EINE WINDTURBINE
PALIER À ROULEMENT COMPRENANT AU MOINS UN ANNEAU EN PLUSIEURS PARTIES, EN PARTICULIER POUR UNE ÉOLIENNE

(30) Priority: 25.03.2013 FR 1352634
(43) Date of publication of application: 01.10.2014
(73) Proprietor: Aktiebolaget SKF, 415 50 Göteborg (SE)
(72) Inventor: Magny, Jean-Baptiste, 89580 Mige (FR); Bouron, Cyril, 89200 Avallon (FR); Ovize, Pascal, 89530 Chitry Le Fort (FR)
(74) Representative: Burö, Sven Peter

(56) References cited:
- DE-A1-102010 023 356
- FR-A5- 2 222 897
- JP-A- H0 544 720
- US-A1- 2011 027 086

## Description

The present invention concerns the area of rolling bearings, in particular rolling bearings comprising an outer ring, an inner ring and at least two rows of rolling elements, such as rollers, which are arranged between said rings.

More especially, the invention concerns the area of large diameter rolling bearings, notably those utilized in wind turbines or even in tunnel boring machines, such as tunnellers or excavators.

Such a rolling bearing generally comprises two rings, an inside one and an outside one, and at least two rows of angular contact rollers which are arranged between the roller raceways of said rings so as to withstand axial and radial forces at the same time. Such a bearing can also withstand elevated overturning moments.

In order to allow the rows of rollers to be mounted radially between the rings, mounting openings are generally provided which radially cross the thickness of one of the rings and open out into the raceways which are arranged on said ring. Sealing plugs are mounted inside said openings and form locally the raceways for the rollers.

The presence of such plugs in the loaded zones of the rolling bearing is a problem insofar as the admissible axial and radial forces are reduced. Moreover, the disadvantage of said solution is that it requires a large number of operations to introduce the rows of rollers and to fix the sealing plugs. Furthermore, the mounting openings promote further dimensional deformation of the ring during heat treatment of said ring, notably for bearings with large diameters.

The present invention aims to overcome these drawbacks. JP H05 44720 A (Nippon Thomson) discloses a rolling bearing according to the preamble of claim 1.

More particularly, the present invention aims to provide a rolling bearing which is simple to produce and to mount and which allows elevated axial and/or radial forces to be withstood.

In one embodiment, the rolling bearing comprises an inner ring, an outer ring and a plurality of rows of rolling elements each arranged between the raceways which are arranged on said rings, the number of rows of rolling elements N_{rows} being in excess of or equal to two. At least one of the inner and outer rings comprises a plurality of part rings which are mounted bearing axially against one another. The number of part rings N_{rings} is defined by N_{rings} ≥ N_{rows} + 1.

In an advantageous manner, each part ring of the said ring comprises at least one radial mounting surface bearing axially against a corresponding radial mounting surface of one of the other part rings. In a preferred manner, the rolling elements of each row extend axially on both sides of the radial mounting surface of the associated part ring.

Two raceways for two adjacent rows of rolling elements are provided only on one of the part ring. In an advantageous manner said part ring is made in a material having a mechanical strength in excess of that of other part rings of said ring.

In one embodiment, the rolling elements of each row are in direct contact with the associated raceway of the inner and outer rings.

In an advantageous manner, at least the raceways of said ring are continued in the circumferential direction.

In a preferred manner, the bearing comprises means for assembling the part rings of said ring, it being possible, for example, for said mounting means to comprise at least one fixing screw which extends axially within the thickness of said ring.

In one embodiment, the rolling elements are angular contact rollers suited for withstanding radial and axial stresses at the same time. At least two of the part rings of said ring can each comprise a guide face which forms support for an end face of each roller.

In one embodiment, each of the inner and outer rings comprises a plurality of part rings mounted bearing axially against one another, the number of part rings of each ring being defined by N_{rings} ≥ N_{rows} + 1.

The present invention will be better understood by reading the detailed description of the embodiments which are taken by way of example, are in no way limiting and are illustrated by the accompanying drawings, in which:
- Figure 1 is an axial sectional half-view of a rolling bearing according to a first embodiment of the invention, and
- Figure 2 is an axial sectional half-view of a rolling bearing according to a second embodiment of the invention.

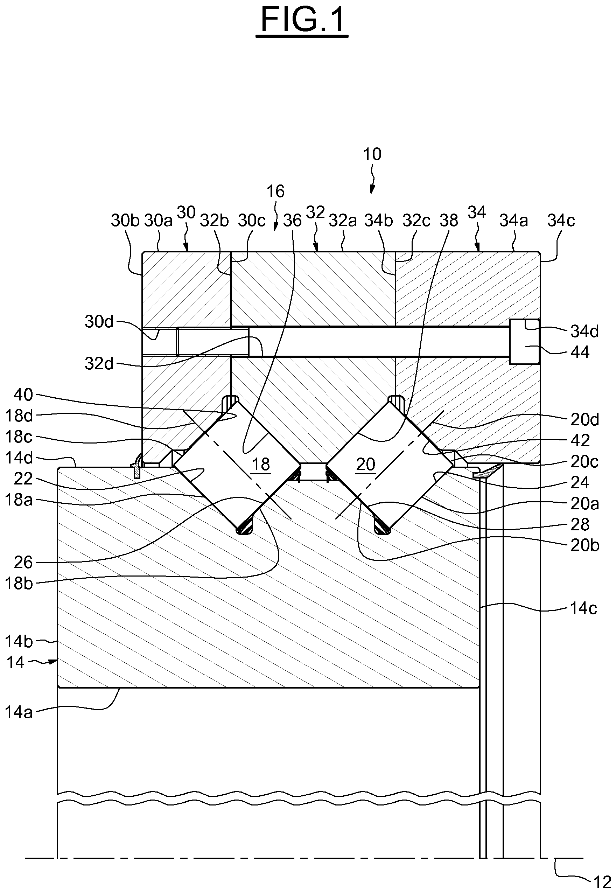

In Figure 1, the large diameter rolling bearing 10 can be utilized notably in wind turbines or in tunnel boring machines. The rolling bearing 10, with axis 12, comprises an inner ring 14, an outer ring 16 and two rows of angular contact rollers 18, 20 which are arranged between said rings. The inner 14 and outer 16 rings are concentric and extend axially along the axis of rotation 12 of the bearing. The inner ring 14 is solid. The term « solid ring » refers to a ring, the form of which is obtained by machining with the swarf worked away (turning, rectifying) from tubes, bars and forged and/rolled blanks. As will be described in more detail below, the outer ring 16 is designed notably so as to facilitate the mounting of the rollers 18, 20 in the annular space which is delimited radially between the rings.

The rollers 18, 20 of the bearing are themselves identical and each comprise an outer rolling surface 18a, 20a and two opposite end faces 18b et 18c, 20b and 20c which delimit said outer rolling surface axially, with respect to the axis of rotation 18d, 20d of said roller. In the embodiment shown, the rolling surfaces 18a, 20a are cylindrical. As an alternative to this, the rolling surfaces can have a spherical or logarithmic profile. In the embodiment shown, the angle formed between the axes of rotation 18d, 20d of the rollers is equal to 90°. The angle formed between each axis of rotation 18d, 20d and the axis 12 of the bearing is approximately equal to 45°. As an alternative to this, said angle could be between 20° and 70° inclusive.

The inner ring 14 is realized in one single piece or part and comprises a bore 14a which is intended to be mounted on a frame or a structure of a machine (not shown) and is delimited axially by two opposite lateral radial surfaces 14b, 14c. The inner ring 14 also comprises a staged outer surface 14d on which are formed first and second annular inner roller tracks or raceways 22, 24. The raceways 22, 24 are themselves symmetrical with regard to a transverse radial plane passing between the rows of rollers 18, 20. The raceways 22, 24 are continued in the circumferential direction. Each raceway 22, 24 extends obliquely toward the interior from the cylindrical outer surface 14d and is in the form of a truncated cone. In a straight section, each raceway 22, 24 has a straight inner profile which is in linear contact with the surface of the roller 18a, 20a of each of the rollers 18, 20.

The inner ring 14 also comprises annular guide faces 26, 28 which are formed on the outer surface 14d and are able to bear axially with the outer faces 18b, 20b of the rollers, with respect to the axes of rotation 18d, 20d. The guide faces 26, 28 are themselves symmetrical with regard to the transversal radial plane passing between the rows of rollers 18, 20. Each guide face 26, 28 is rectilinear and is arranged perpendicularly with respect to the associated raceway 22, 24 by being connected to the small diameter edge of said raceway by a concave throat. Each guide face 26, 28 extends obliquely toward the exterior from said throat and is connected to the outer surface 14d of the inner ring. The guide faces 26, 28 extend radially with regard to the axes of rotation 18d, 20d of the rollers. Each guide face 26, 28 and the associated raceways 22, 24 delimit a V-shaped groove which is oriented radially toward the exterior.

The outer ring 16 is formed by the assembling of three part rings 30, 32, 34 which are mounted bearing axially against one another. The outer ring 16 is subdivided in the axial direction by the three part rings 30 to 34. The part ring 30 forms an intermediate middle ring and the two part rings 32, 34 form the end rings which bear axially against said middle ring on both sides. The part rings 30 to 34 are the solid type.

Each part ring 30, 32, 34 comprises a cylindrical outer surface 30a, 32a, 34a which is delimited axially by two opposite lateral radial surfaces 30b and 30c, 32b and 32c and 34b and 34c. The part ring 30 is mounted bearing axially against the part ring 32 on the side opposite the part ring 34. The radial surface 30c of the end part ring 30 bears axially directly against the radial surface 32b of the middle part ring 32. The radial surface 34b of the other end part ring 34 bears directly against the radial surface 32c of said middle part ring. The radial surfaces 30b, 34c form end surfaces of the outer ring 16 which are offset axially with regard to the corresponding radial surfaces 14b, 14c of the inner ring 14. As an alternative to this, the radial surfaces 30b and 14b, 34c and 14c of the outer and inner rings could be coplanar. The outer surfaces 30a to 34a of the part rings form the cylindrical outer surface of the outer ring 16.

The outer ring 16 comprises a staged bore which is formed by the bores of the part rings 30 to 34. Annular outer raceways 36, 38 are formed in the bore of the outer ring 16. The raceways 36, 38 are formed in the bore of the middle part ring 32. The raceways 36, 38 are symmetrical with respect to the transversal radial plane passing between the rows of rollers 18, 20. Each raceway 36, 38 extends obliquely toward the exterior from the bore of the middle part ring 32 and is connected to the small diameter edge of the associated radial mounting surface 32b, 32c by a concave throat. Each raceway 36, 38 is in the form of a truncated cone and in a straight section has a straight inner profile which is in linear contact with the rolling surfaces 18a, 20a of the rollers. The raceways 22, 24 of the inner ring and the raceways 36, 38 of the outer ring are respectively opposite, parallel and symmetrical with respect to the axes of rotation 18d, 20d of the rollers.

The outer ring 16 also comprises guide faces 40, 42 which are formed in the bore of the outer ring 16 and are able to move axially into contact against the end faces 18c, 20c of the rollers with respect to the axes of rotation 18d, 20d. The guide face 40, respectively 42, is formed in the bore of the end part ring 30, respectively 34. The guide faces 40, 42 are symmetrical with respect to the transversal radial plane passing between the rows of rollers 18, 20. Each guide face 40, 42 is rectilinear and is arranged perpendicularly with respect to the associated raceways 36, 38. Each guide face 40, 42 extends obliquely toward the exterior from the bore of the end part ring 30, 34 and is connected to the small diameter edge of the associated radial mounting surface 30c, 34b by a concave throat. Each guide face 40, 42 extends radially with regard to the axes of rotation 18d, 20d of the rollers. Each guide face 40, 42 and the associated raceway 36, 38 delimit a V-shaped groove which is oriented radially toward the interior. The outer guide faces 40, 42 and the inside guide faces 26, 28 are respectively opposite and parallel.

The raceway 22 and the guide face 26 of the inner ring, with the raceway 36 and the guide face 40 of the outer ring, define a first annular space inside of which is arranged the row of rollers 18. Each roller 18 is mounted in direct contact with the raceways 22, 36 and is maintained laterally in position by the guide faces 26, 40. Each guide face 26, 40 forms a support surface for the end faces 18b, 18c of the rollers. The rollers 18 extend axially on both sides of the radial mounting surfaces 30c, 32b of the part rings 30, 32 of the outer ring. Each radial surface 30c, 32b is situated axially at the level of or at the site of the row of rollers 18.

In a similar manner, the raceway 24 and the guide face 28 of the inner ring, with the raceway 38 and the guide face 42 of the outer ring, delimit a second annular space, inside of which is arranged the row of rollers 20. The rollers 20 are in direct contact with the raceways 24, 38 and are maintained laterally by the guide faces 28, 42. The rollers 20 extend axially on both sides of the radial mounting surfaces 32c, 34b of the part rings 32, 34 of the outer ring.

The bearing 10 also comprises at least one fixing screw 44 for assembling the part rings 30 to 34 of the outer ring. The screw 44 extends axially within the thickness of each of said part rings. For this purpose, each part ring 30 to 34 comprises an axial through-hole 30d to 34d for the mounting of the screw 44. The hole 34d has a staged form for the mounting of the head of the screw axially inside the part ring 34. The hole 30c comprises a thread for screwing the threaded end of the screw 44.

The design of the outer ring 16 from at least three distinct parts or part rings 30, 32, 34 is particularly advantageous insofar as it is no longer necessary to provide, within the thickness of the outer ring or the inner ring, radial openings for mounting the rollers 18, 20. Thus, the raceways 36, 38 of the outer ring and the raceways 22, 24 of the inner ring are continued in the circumferential direction. The bearing 10 withstands elevated axial and radial forces.

In order to carry out the assembling of the bearing 10, the procedure is as follows. In a first stage, the first row of rollers 18 is mounted between the inner ring 14 and the part ring 30 of the outer ring. The row of rollers 18 is mounted against the raceway 22 and is maintained laterally by the guide faces 26, 40. Then, during a second stage, the part ring 32 of the outer ring is moved so as to be bear axially against the radial mounting surface 30c of the part ring 30 and against the rolling surfaces 18a of the rollers. The raceway 36 of the part ring 32 is therefore in contact with the row of rollers 18. During a third stage, the second row of rollers 20 is mounted between the part ring 32 and the inner ring 14 axially on the side opposite to the first row of rollers 18. The row of rollers 20 is mounted between the raceways 24 and 38. During a fourth stage, the part ring 34 is mounted against the radial mounting surface 32c of the part ring 32. Finally, during a fifth stage, the part rings 32 to 34 are themselves assembled by means of the fixing screw 44.

In the embodiment shown, solely the middle part ring 32 allows for the transmission of axial and radial forces between the outer ring and the two rows of rollers 18, 20. The outer raceways 36, 38 are arranged on one single part ring of the outer ring 16, that is the middle part ring 32. Thus, it is possible to realize the part ring 32 in a material which has a mechanical strength which is in excess of that of the other part rings 30, 34 of the outer ring and/or to provide specifically surface treatments to the raceways 36, 38 of said part ring 32. Thus, the other part rings 30, 34 of the outer ring can be obtained at low cost, which reduces the overall cost of the bearing. Moreover, if the raceways 36, 38 of the part ring 32 are ruined and require replacement, only the part ring 32 comprising said paths is changed.

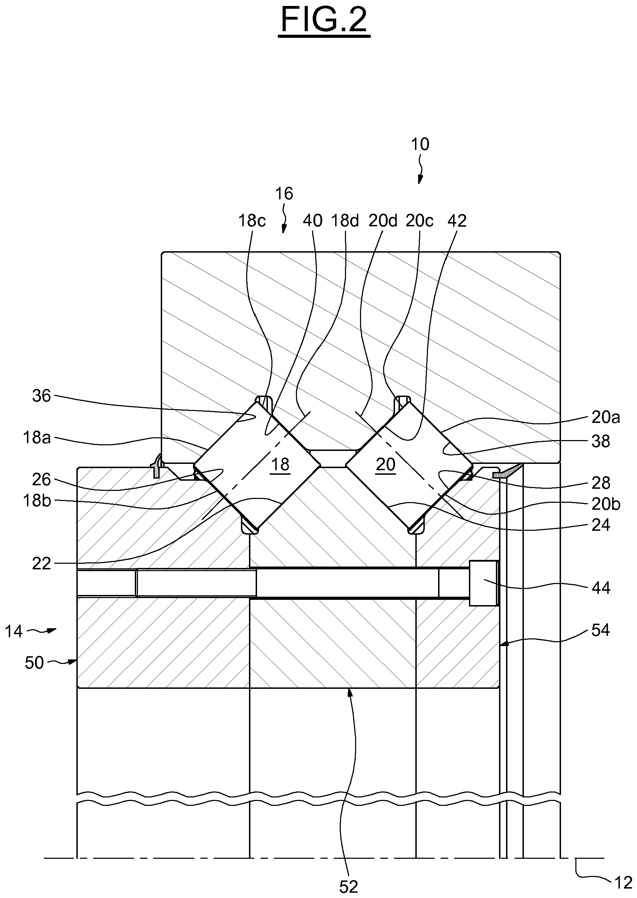

In the first embodiment shown, the bearing 10 comprises two rows of rollers 18, 20, the contacts of which are O-type. In the second embodiment shown in Figure 2, in which identical elements are given the same references, the contacts of the bearing 10 are X-type. The outer ring 16 is realized here in one single part and the inner ring 14 comprises three part rings 50, 52, 54 which are mounted bearing axially against one another in a manner similar to the first embodiment. In said embodiment, as the contacts of the rows of rollers 18, 20 are O-type, the axial arrangement of the raceways and of the guide faces on each of the inner 14 and outer 16 rings is reversed with regard to the preceding embodiment. On the outer ring 16, which is realized in one part, the guide faces 40, 42 are situated axially between the raceways 36, 38. The raceways 22, 24 of the inner ring are formed on the middle part ring 52 and the guide faces 26, 28 are formed respectively on the end part rings 50, 54.

In the two embodiments shown, just one of the inner and outer rings is subdivided axially into several part rings. As a variant, it could be possible to provide a bearing in which each of the inner and outer rings comprises a plurality of sections or part rings assembled together, the number of part rings of each ring being strictly in excess of the number of rows of rollers which is itself at least equal to two. For each ring of the bearing, the number of part rings R_{rings} is therefore defined by N_{rings} ≥ N_{rows} + 1 where N_{rows} is the number of rows of bearings and N_{rows} ≥ 2.

In the embodiments shown, the rolling bearing comprises two rows of rolling elements which are provided between the rings. As a variant, it is possible to provide a larger number of rows of rollers whilst nevertheless keeping, for the ring or rings realized in several parts, a number of parts strictly in excess of the number of rows of rollers. Moreover, in the embodiments shown, the rolling elements are angular contact rollers in order to withstand radial and axial stresses at the same time. As a variant, it could also be possible, without departing from the framework of the invention, to utilize other types of rolling elements in order to withstand such combined stresses, for example balls. In this case, the rolling bearing is an angular contact ball bearing. In another variant, it could also be possible to provide a bearing which is intended to withstand purely axial or radial loads.

## Claims

1. Rolling bearing comprising an inner ring (14), an outer ring (16) and a plurality of rows of rolling elements (18, 20) each arranged between the raceways which are arranged on said rings, the number of rows of rolling elements (N_{rows}) being in excess of or equal to two, at least one of the inner and outer rings (14, 16) comprising a plurality of part rings (30, 32, 34) which are mounted bearing axially against one another, the number of part rings (N_{rings}) being defined by N_{rings} ≥ N_{rows} + 1, two raceways (36, 38) for two adjacent rows of rolling elements being provided only on one of the part rings (32), **characterized in that** said part ring is made in a material having a mechanical strength in excess of that of other part rings of said ring.

2. Rolling bearing according to Claim 1, in which each part ring (30, 32, 34) of the said ring comprises at least one radial mounting surface (30c, 32b, 32c, 34b) bearing axially against a corresponding radial mounting surface of one of the other part rings.

3. Rolling bearing according to Claim 2, in which the rolling elements of each row extend axially on both sides of the radial mounting surface (30c, 32b, 32c, 34b) of the associated part ring.

4. Rolling bearing according to any one of the preceding claims, in which at least the raceways of said ring are continued in the circumferential direction.

5. Rolling bearing according to any one of the preceding claims, in which the rolling elements (18, 20) of each row are in direct contact with the associated raceways of the inner and outer rings.

6. Rolling bearing according to any one of the preceding claims, comprising means for assembling the part rings of said ring.

7. Rolling bearing according to Claim 6, in which the assembling means comprise at least one fixing screw (44) which extends axially within the thickness of said ring.

8. Rolling bearing according to any one of the preceding claims, in which the rolling elements are angular contact rollers suited for withstanding radial and axial forces at the same time.

9. Rolling bearing according to Claim 8, in which at least two part rings (30, 34) of said ring each comprise a guide face (40, 42) which forms support for an end face of each roller.

10. Rolling bearing according to any one of the preceding claims, in which each of the inner and outer rings (14, 16) comprises a plurality of part rings mounted bearing axially against one another, the number of part rings of each inner and outer ring being defined by Nrings ≥ Nrows + 1.

## Patentansprüche

1. Wälzlager, das einen Innenring (14), einen Außenring (16) und mehrere Reihen von Wälzelementen (18, 20), die jeweils zwischen den Laufflächen, die an den Ringen angeordnet sind, angeordnet sind, umfasst, wobei die Anzahl an Reihen von Wälzelementen (N_{Reihen}) größer gleich zwei beträgt, wobei der Innen- und/oder Außenring (14, 16) mehrere Teilringe (30, 32, 34), die axial aneinander anliegend befestigt sind, umfassen, wobei die Anzahl an Teilringen (N_{Ringe}) durch N_{Ringe} ≥ N_{Reihen} + 1 definiert wird, wobei zwei Laufflächen (36, 38) für zwei benachbarte Reihen an Wälzelementen nur an einem der Teilringe (32) vorgesehen sind, **dadurch gekennzeichnet, dass** der Teilring aus einem Material mit einer mechanischen Festigkeit, die über der anderer Teilringe des Rings liegt, hergestellt ist.

2. Wälzlager nach Anspruch 1, bei dem jeder Teilring (30, 32, 34) des Rings mindestens eine radiale Befestigungsfläche (30c, 32b, 32c, 34b) umfasst, die axial an einer entsprechenden radialen Befestigungsfläche eines der anderen Teilringe anliegt.

3. Wälzlager nach Anspruch 2, bei dem sich die Wälzelemente jeder Reihe axial auf beiden Seiten der radialen Befestigungsfläche (30c, 32b, 32c, 34b) des zugeordneten Teilrings erstrecken.

4. Wälzlager nach einem der vorhergehenden Ansprüche, bei dem zumindest die Laufflächen des Rings in der Umfangsrichtung fortführend sind.

5. Wälzlager nach einem der vorhergehenden Ansprüche, bei dem die Wälzelemente (18, 20) jeder Reihe in direktem Kontakt mit den zugeordneten Laufflächen des Innen- und des Außenrings stehen.

6. Wälzlager nach einem der vorhergehenden Ansprüche, das Mittel zum Zusammensetzen der Teilringe des Rings umfasst.

7. Wälzlager nach Anspruch 6, bei dem die Zusammensetzmittel mindestens eine Befestigungsschraube (44), die sich axial innerhalb der Dicke des Rings erstreckt, umfassen.

8. Wälzlager nach einem der vorhergehenden Ansprüche, bei dem die Wälzelemente Schrägwälzkörper sind, die dahingehend geeignet sind, zugleich radialen und axialen Kräften zu widerstehen.

9. Wälzlager nach Anspruch 8, bei dem mindestens zwei Teilringe (30, 34) des Rings jeweils eine Führungsfläche (40, 42) umfassen, die eine Stütze für eine Endfläche jedes Wälzkörpers bildet.

10. Wälzlager nach einem der vorhergehenden Ansprüche, bei dem sowohl der Innen- als auch der Außenring (14, 16) mehrere axial aneinander anliegend befestigte Teilringe umfasst, wobei die Anzahl an Teilringen sowohl des Innen- als auch des Außenrings durch N_{Ringe} ≥ N_{Reihen} + 1 definiert wird.

## Revendications

1. Palier à roulement comprenant un anneau intérieur (14), un anneau extérieur (16) et une pluralité de rangées d'éléments de roulement (18, 20) chacun agencés entre les pistes qui sont formées sur lesdits anneaux, le nombre de rangées d'éléments de roulement (N_{rangées}) étant supérieur ou égal à deux, au moins un des anneaux intérieur et extérieur (14, 16) comprenant une pluralité d'anneaux partiels (30, 32, 34) qui sont montés en s'appuyant axialement les uns contre les autres, le nombre d'anneaux partiels (Nₐₙₙₑₐᵤₓ) étant défini par Nₐₙₙₑₐᵤₓ ≥ N_{rangées} + 1, deux pistes (36, 38) pour deux rangées d'éléments de roulement adjacentes étant prévues seulement sur un des anneaux partiels (32), **caractérisé en ce que** ledit anneau partiel est constitué d'un matériau dont la résistance mécanique est supérieure à celle des autres anneaux partiels dudit anneau.

2. Palier à roulement selon la revendication 1, dans lequel au moins chaque anneau partiel (30, 32, 34) dudit anneau présente au moins une surface de montage radiale (30c, 32b, 32c, 34b) qui s'appuie axialement contre une surface de montage radiale correspondante de l'un des autres anneaux partiels.

3. Palier à roulement selon la revendication 2, dans lequel les éléments de roulement de chaque rangée s'étendent axialement sur les deux côtés de la surface de montage radiale (30c, 32b, 32c, 34b) de l'anneau partiel associé.

4. Palier à roulement selon l'une quelconque des revendications précédentes, dans lequel au moins les pistes dudit anneau sont continues dans la direction circonférentielle.

5. Palier à roulement selon l'une quelconque des revendications précédentes, dans lequel les éléments de roulement (18, 20) de chaque rangée sont en contact direct avec les pistes associées des anneaux intérieur et extérieur.

6. Palier à roulement selon l'une quelconque des revendications précédentes, comprenant des moyens pour assembler les anneaux partiels dudit anneau.

7. Palier à roulement selon la revendication 6, dans lequel les moyens d'assemblage comprennent au moins une vis de fixation (44) qui s'étend axialement à l'intérieur de l'épaisseur dudit anneau.

8. Palier à roulement selon l'une quelconque des revendications précédentes, dans lequel les éléments de roulement sont des rouleaux de contact angulaires appropriés pour supporter des forces radiales et axiales en même temps.

9. Palier à roulement selon la revendication 8, dans lequel au moins deux anneaux partiels (30, 34) dudit anneau présentent chacun une face de guidage (40, 42) qui constitue un support pour une face d'extrémité de chaque rouleau.

10. Palier à roulement selon l'une quelconque des revendications précédentes, dans lequel au moins chacun des anneaux intérieur et extérieur (14, 16) comprend une pluralité d'anneaux partiels montés en s'appuyant axialement les uns contre les autres, le nombre d'anneaux partiels de chacun des anneaux intérieur extérieur étant défini par Nₐₙₙₑₐᵤₓ ≥ N_{rangées} + 1.
